# EUROPÄISCHE PATENTANMELDUNG

(11) **EP 0 903 712 A2**
(43) Veröffentlichungstag der Anmeldung: **24.03.1999**
(21) Anmeldenummer: 98116073.2
(22) Anmeldetag: 26.08.1998
(51) Int. Cl.: G08G 1/0968

(54) **Anzeigevorrichtung für Fahrzeuge zur Anzeige der Reichweite**

(30) Priorität: 19.09.1997 DE 19741316
(71) Anmelder: Bayerische Motoren Werke Aktiengesellschaft, 80788 München (DE)
(72) Erfinder: Bigalke, Manfred, 85591 Vaterstetten (DE)

(57) **Zusammenfassung**

Die Erfindung bezieht sich auf eine Anzeigevorrichtung für Fahrzeuge zur Anzeige der Reichweite in Abhängigkeit von der momentanen im Fahrzeug vorhandenen Energiemenge und in Abhängigkeit von verbrauchsbeeinflussenden Parametern im Fahrzeug.

Die Anzeigevorrichtung ist mit Mitteln zur Bestimmung der Entfernung des aktuellen Fahrortes zum gewünschten Zielort verbunden und weist eine erste Anzeigeeinheit auf, die sowohl diese Entfernung als auch die Reichweite anzeigt.

Zusätzlich oder alternativ ist die Anzeigevorrichtung auch mit Mitteln zur Bestimmung der Tankstellen im wesentlichen in Richtung des Zielortes verbunden und weist eine erste Anzeigeeinheit, die die Reichweite anzeigt, und eine zweite Anzeige auf, die im Umfeld der Reichweite im wesentlichen in Richtung des Zielortes zumindest die bezogen auf den aktuellen Fahrort nächstliegende Tankstelle anzeigt, wenn die Entfernung größer als die Reichweite ist und/oder wenn die Reichweite einen vorbestimmten Schwellwert unterschreitet.

## Beschreibung

Die Erfindung bezieht sich auf eine Anzeigevorrichtung für Kraftfahrzeuge zur Anzeige der Reichweite nach dem Oberbegriff der Patentansprüche 1 und 2.

Eine derartige Anzeigevorrichtung wird beispielsweise in der DE 196 12 062 beschrieben. Insbesondere wird hierbei die Reichweite in Form eines Reichweitenbereichs angezeigt. Eine weitergehende Hilfestellung zur möglichen Betankung des Fahrzeuges geht aus dieser Anmeldung nicht hervor.

Weiterhin ist beispielsweise aus der DE 195 16 649 A1 ein Navigationssystem bekannt, bei dem im Falle eines geringen Tankinhalts unter Berücksichtigung des mit Hilfe eines Bordcomputers ermittelten Durchschnittsverbrauchs die voraussichtliche Reichweite bestimmt wird und Tankstellen als zusätzliche Information wiedergibt, die sich innerhalb der Reichweite befinden. Dabei sollen insbesondere Tankstellen in einem definierten Umkreis um den aktuellen Standort bzw. Fahrort ständig wiedergegeben werden. Bei dieser Wiedergabe der Tankstellen ist kein Bezug zum gewünschten Zielort vorhanden. Weiterhin wird bei diesem bekannten Navigationssystem auch die Erreichbarkeit des Zielortes nicht überprüft.

Es ist Aufgabe der Erfindung, eine Anzeigevorrichtung eingangs genannter Art derart zu verbessern, daß der Fahrer bei der Sicherstellung der Erreichbarkeit des Zielortes möglichst wenig vom Fahrgeschehen abgelenkt wird.

Diese Aufgabe wird durch die kennzeichnenden Merkmale der Patentansprüche 1 und 2 gelöst.

Vorzugsweise geht die Erfindung von einer Anzeigevorrichtung gemäß der DE 196 12 062 aus, bei der die Reichweite in Form eines Reichweitenbereichs angezeigt wird. Auch kann der Anzeige des Reichweitenbereichs, der durch die Auswertung von verbrauchsbeeinflussenden Parametern über längere Zeit bestimmt wird, entsprechend der DE 196 12 062 eine zu erwartende Reichweite mit der aktuellen Fahrweise überlagert sein.

Die Mittel zur Bestimmung der Entfernung des aktuellen Fahrortes zum gewünschten Zielort sowie Mittel zur Bestimmung der Tankstellen im wesentlichen in Richtung des Zielortes werden vorzugsweise durch ein ohnehin vorhandenes Navigationssystem dargestellt.

Das Wesentliche gemäß Patentanspruch 1 ist die kombinierte Darstellung der Reichweite sowie der Entfernung des aktuellen Fahrortes zum gewünschten Zielort, wodurch beide Informationen dem Fahrer lediglich durch eine einzige Anzeigeeinheit übermittelt werden. Auf diese Weise findet eine sinnvolle Kombination der in einem Navigationssystem vorhandenen Daten mit einer Anzeigevorrichtung zur Anzeige der Reichweite statt.

Das Wesentliche des Patentanspruchs 2 besteht darin, daß dem Fahrer lediglich dann ein Warnhinweis auf Tankstellen im Umkreis der noch möglichen Reichweite gegeben wird, wenn ein Nachtanken zum Erreichen des Zielortes erforderlich ist. Jedoch können verstärkt Warnhinweise auf Tankstellen vorgenommen werden, wenn ein kleines Tankstellennetz bzw. ein reduziertes Tankstellenangebot, z. B. nachts oder durch Überlastung bei starker Frequentierung, vorliegen. Auch kann der Warnhinweis auf Tankstellen selektiv bezogen auf den fahrzeugspezifischen Energieträger, z. B. Gas, Wasserstoff, Strom oder Benzin, oder bezogen auf fahrzeugspezifische Tank-Technik (z. B. Robottanken) vorgenommen werden.

Durch die erfindungsgemäße Anzeigevorrichtung wird der Fahrer zum einen nur dann vom Fahrgeschehen abgelenkt, wenn ein Nachtanken zum Erreichen des Zielortes erforderlich ist und zum anderen jedoch bei Bedarf umfassend über Nachtankmöglichkeiten informiert.

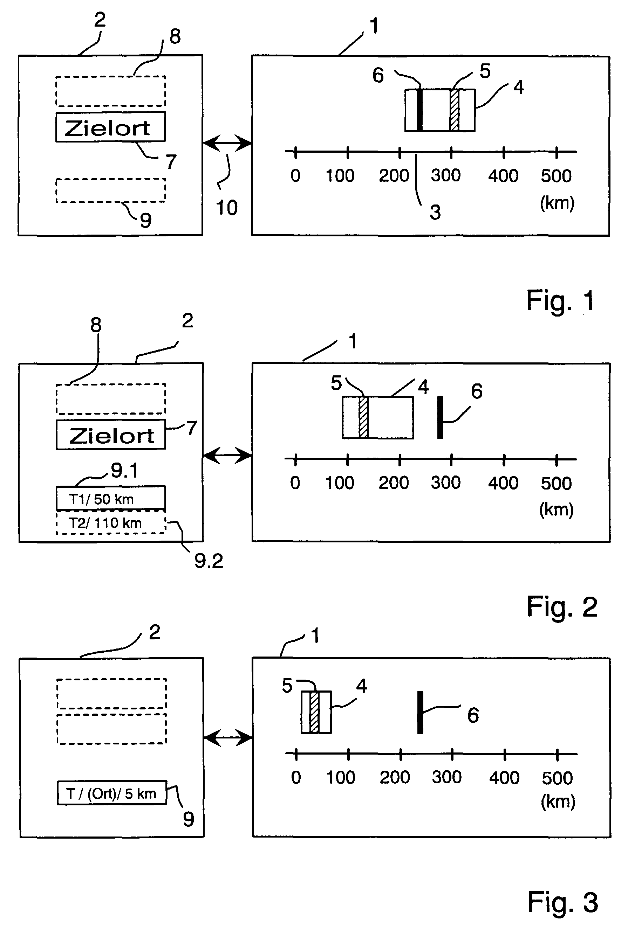

In der Zeichnung ist ein Ausführungsbeispiel der Erfindung dargestellt. Es zeigen
- Fig. 1 bis Fig. 3: drei verschiedene Fahrszenarien, durch die die erfindungsgemäße Anzeigevorrichtung unterschiedlich zum Einsatz kommt.

In den Fig. 1 bis 3 sind gleiche Komponenten mit gleichen Bezugszeichen versehen. Eine Anzeigeeinheit 1 ist mit Mitteln 2 zur Bestimmung der Entfernung des aktuellen Fahrortes zum gewünschten Zielort und zur Bestimmung der Tankstellen im wesentlichen in Richtung des Zielortes in Form eines Navigationssystems, beispielsweise über einen digitalen Datenbus 10, elektrisch verbunden. Die Anzeigeeinheit 1 ist als Balkenanzeige ausgeführt, die eine Reichweitenskala 3 aufweist. Die Anzeige der Reichweite in Form eines Reichweitenbereichs 4 ist durch einen vorzugsweise optisch hervorgehobenen Balken dargestellt. Die Hervorhebung erfolgt beispielsweise durch eine Beleuchtung des sich aus der vorhandenen Energiemenge ergebenden Reichweitenbereichs. Der Reichweitenbereich 4 wird zum einen in Abhängigkeit von der momentanen im Fahrzeug vorhandenen Energiemenge und zum anderen in Abhängigkeit von verbrauchsbeeinflussenden Parametern im Fahrzeug über längere Zeit hinweg bestimmt. Der Reichweitenbereich 4 ergibt sich beispielsweise aus dem minimalen und dem maximalen Durchschnittsverbrauch des Motors, vorzugsweise unter Berücksichtigung fahrerspezifischer Besonderheiten, beispielsweise sportlicher oder sparsamer Fahrweisen, und/oder unter Berücksichtigung streckenabhängiger Besonderheiten, z. B. Bergfahrt oder stop-and-go-Betrieb.

Die Anzeige der Reichweite in Form des Reichweitenbereichs 4 erfolgt über eine Langzeitbeobachtung dieser verbrauchsbeeinflussenden Parameter. Zusätzlich oder alternativ kann als Reichweite ein Reichweitenwert oder ein kleinerer Reichweitenbereich 5 aufgrund einer Kurzzeitbeobachtung angezeigt werden, der der zu erwartenden Reichweite mit der aktuellen Fahrweise entspricht.

Im Navigationssystem 2 liegt die Information 8 über den aktuellen Standort bzw. Fahrort vor, die bei Bedarf angezeigt werden kann. Weiterhin liegt die Information 7 über den gewünschten Zielort vor, die üblicherweise bei Navigationssystemen auf dem Bildschirm angezeigt wird. Aus den Informationen 7 und 8 bestimmt das Navigationssystem 2 aufgrund abgespeicherter digitaler Landkarten die Entfernung 6 des aktuellen Fahrortes zum gewünschten Zielort, wonach diese Entfernung 6 über den Datenbus 10 der Anzeigeeinheit 1 übermittelt wird. Die Entfernung 6 wird gleichzeitig mit der Reichweite 4 und/oder 5 auf der Reichweitenskala 3 zum einfachen Vergleich der Reichweite mit der Entfernung überlagert angezeigt.

Im Beispiel nach Fig. 1 reicht die im Fahrzeug vorhandene Energiemenge voraussichtlich aus, um den Zielort ohne Nachtanken zu erreichen. Für diesen Fall wird im Display 9 des Navigationssystems 2 kein Hinweis auf eine Tankstelle eingeblendet.

Im Beispiel nach Fig. 2 reicht die im Fahrzeug vorhandene Energiemenge auch bei extrem verbrauchsoptimierter Fahrweise voraussichtlich nicht aus, um den Zielort ohne Nachtanken zu erreichen. Da ein Nachtanken erforderlich ist, werden beispielsweise sämtliche Tankstellen, die mit einer maximalen Abweichung von einer vorgegebenen Kilometeranzahl (z. B. 2 Kilometer), vom direkten Weg zum Zielort vorhanden sind, auf dem Display 9 (oder 9,1, 9,2 usw.) nacheinander angezeigt. Es kann jedoch auch, insbesondere auf Wunsch des Fahrers, nur die nächstmögliche Tankstelle im wesentlichen in Richtung des Zielortes angezeigt werden.

Im Beispiel nach Fig. 3 kann auch unabhängig von der Anzeige der Entfernung 6 bzw. von der Eingabe des Zielortes durch die Tatsache, daß die im Fahrzeug vorhandene Energiemenge bzw. die zu erwartende Reichweite nur noch sehr gering ist, automatisch zwangsweise die nächstmögliche Tankstelle auf dem Display 9 eingeblendet werden.

Ergänzend wird daraufhingewiesen, daß die Erfindung auch bei Fahrzeugen anwendbar ist, die auf Fahrwegen mit automatischer Spursteuerung einsetzbar sind.

Somit wird der Fahrer bei energiekritischen Zuständen bestmöglich auf das erforderliche Nachtanken hingewiesen, bei ausreichender Energiemenge jedoch möglichst wenig vom Fahrgeschehen abgelenkt.

## Patentansprüche

1. Anzeigevorrichtung für Fahrzeuge zur Anzeige der Reichweite in Abhängigkeit von der momentanen im Fahrzeug vorhandenen Energiemenge und in Abhängigkeit von verbrauchsbeeinflussenden Parametern im Fahrzeug, dadurch gekennzeichnet, daß die Anzeigevorrichtung mit Mitteln (2) zur Bestimmung der Entfernung (6) des aktuellen Fahrortes zum gewünschten Zielort verbunden ist und daß die Anzeigevorrichtung eine erste Anzeigeeinheit (1) aufweist, die sowohl diese Entfernung (6) als auch die Reichweite (4; 5) anzeigt.

2. Anzeigevorrichtung für Fahrzeuge zur Anzeige der Reichweite in Abhängigkeit von der momentanen im Fahrzeug vorhandenen Energiemenge und in Abhängigkeit von verbrauchsbeeinflussenden Parametern im Fahrzeug, insbesondere nach Patentanspruch 1, dadurch gekennzeichnet, daß die Anzeigevorrichtung mit Mitteln (2) zur Bestimmung der Entfernung (6) des aktuellen Fahrortes zum gewünschten Zielort und zur Bestimmung der Tankstellen im wesentlichen in Richtung des Zielortes verbunden ist und daß die Anzeigevorrichtung eine erste Anzeigeeinheit (1) aufweist, die die Reichweite (4; 5) anzeigt, und eine zweite Anzeige (9; 9.1, 9.2) aufweist, die im Umfeld der Reichweite im wesentlichen in Richtung des Zielortes zumindest die bezogen auf den aktuellen Fahrort nächstliegende Tankstelle anzeigt, wenn die Entfernung (6) größer als die Reichweite (4; 5) ist und/oder wenn die Reichweite einen vorbestimmten Schwellwert unterschreitet.
